# EUROPEAN PATENT APPLICATION

(11) **EP 2 525 291 A1**
(43) Date of publication of application: **21.11.2012**
(21) Application number: 10851265.8
(22) Date of filing: 23.08.2010
(51) Int. Cl.: G06F 9/48, H04M 1/725

(54) **APPLICATION PROGRAM MANAGEMENT METHOD AND DEVICE**

(30) Priority: 11.05.2010 CN 201010174379
(71) Applicant: ZTE Corporation, Shenzhen, Guangdong 518057 (CN)
(72) Inventor: BAO, Narisong, Shenzhen Guangdong 518057 (CN); ZHOU, Yang, Shenzhen Guangdong 518057 (CN); YIN, Zhuan, Shenzhen Guangdong 518057 (CN)
(74) Representative: Kling, Simone
(86) International application number: PCT/CN2010/076250
(87) International publication number: WO 2011/140760

(57) **Abstract**

The disclosure discloses a method for managing an application program, in which a scene program module or an application management module of a mobile terminal saves a state of the application program by calling a Save function with a return value, and restores the state of the application program by calling a Startup function, so that the state of the application program in the current running application program list can be saved by the application program, and the state of the application program can be restored by the application program. The disclosure also discloses a device for managing an application program. By adopting the method and the device provided by the disclosure, the application programs can be saved and restored in batches, and it is advantageous to enhance user experience.

## Description

### TECHNICAL FIELD

The disclosure relates to the technique of program management in a mobile terminal, and in particular to a method and a device for managing an application program.

### BACKGROUND

With the rapid development of the mobile terminal, the function of the mobile terminal are increased gradually, and besides typically functioning as a telephone, the mobile terminal is also integrated with functions such as Personal Digital Assistant (PDA), game machine, Moving Picture Experts Group Audio Layer-3 (MP3), camera, photographing, recording, Global Positioning System (GPS), surfing the Internet and so on. In recent years, the function of the mobile terminal is even directed to focus on the function of a Personal Computer (PC); a more powerful mobile terminal with increasing functions, such as smart phone, is common; like the PC, an application program in the smart phone can also be installed or uninstalled according to personal requirements. At present, the mobile terminal is not only a simple communication tool, but also a consumer product which combines smartness, commerce, entertainment and other functions; in the future, the application program of the mobile terminal would be developed in an unimaginable speed and increased in a considerable speed with the development of science and technology.

As more application programs is presented to people, more application programs can run at the same moment; for example, a user needs to use the commerce function related application programs, including reader, recorder, video conference, and so on, when working; a user needs to use the entertainment function related application programs, including music player, browser, instant massager, and so on, when taking a break; in different environments, the user needs to open or close many application programs.

At present, a special application management module is used for managing the application programs in the mobile terminal software art, and the name of the module might not be the same on different operating systems or platforms; taking the Leadcore platform of Datang Mobile and the Android platform of Google for example, the application management module is called Framework which is responsible for managing, regulating and controlling each application program, recording information and state of the application program. When installing an application program, the basic information of the application, including four basic call-back functions, namely, Startup function, Stop function, Pause function and Restore function, is needed to be registered in the Framework; the Framework is used to start and stop the application program; the Framework would maintain the basic information and the running state of each application program; the Framework maintains the current running application program through the current running application program list, wherein the current running application program list can reflect the sequence of the startup of the application programs.

At present, the application program management on the mobile terminal is relatively simple; when a user needs to handoff from one scene to another, the application programs has to be stopped or started one by one. Besides, when a user needs to enter into a usage scene from the original state of the terminal, the application programs related to the usage scene also has to be started one by one, thus this frequent operation may cause poor user experience.

### SUMMARY

In view of this, the main object of the disclosure is to provide a method and a device for managing an application program, which can manage a plurality of application programs in batches and enhance the user experience.

In order to realize the object above, the technical scheme of the disclosure is realized below.
the disclosure provides a method for managing an application program, which includes:
saving, by a scene program module or an application management module of a mobile terminal, a state of an application program by calling a Save function with a return value, and restoring the state of the application program by calling a Startup function.

In the scheme above, the method further includes: before saving by the scene program module a state of an application program by calling a Save function with a return value, sending, by the scene program module, information for inquiring a current running application program to the application management module of the mobile terminal; after receiving the information by the application management module, sending by the application management module a current running application program list to the scene program module.

In the scheme above, the method further includes: before saving by the application management module a state of an application program by calling a Save function with a return value, sending, by the scene program module, information for saving a state of a current application program to the application management module.

In the scheme above, the saving a state of an application program by calling a Save function with a return value includes: calling a Save function with a return value of an application program in a current running application program list by the scene program module; saving current running related information and returning a scene identifier to the scene program module by the application program; then receiving the scene identifier returned by the application program and associating the scene identifier received with the application program by the scene program module; after the scene program module calls Save functions of all current running application programs, saving all application programs and their scene identifiers as a scene file by the scene program module; or, calling a Save function with a return value of an application program in a current running application program list by the application management module; saving current running related information and returning a scene identifier to the application management module by the application program; receiving the scene identifier returned by the application program and associating the scene identifier received with the application program by the application management module; sending all application programs and their scene identifiers to the scene program module by the application management module after the application management module calls Save functions of all current running application programs; saving the application programs and their scene identifiers as a scene file by the scene program module.

In the scheme above, the calling a Save function with a return value of an application program in a current running application program list includes: sending a Save parameter to the application program by the scene program module or the application management module; then receiving the Save parameter, saving current running related information, associating the related information with the application program, adding a scene identifier to the related information saved and sending the scene identifier to the scene program module or sending the scene identifier to the application management module by the application program.

In the scheme above, the restoring the state of the application program by calling a Startup function includes: selecting the scene file, reading an application program list and the scene identifier thereof in the scene file and calling a Startup function of an application program by the scene program module; and sending information indicative of restoration of the application program to the scene program module by the application program after the application program is started and restored; then continuing to restore a next application program by the scene program module until all application programs in the scene file are restored; or, sending the application program list and the scene identifiers thereof in the scene file to the application management module by the scene program module; then calling a Startup function and restoring an application program in the scene file by the application management module.

In the scheme above, the calling a Startup function includes: sending a Startup parameter including a scene identifier to the application program by the scene program module or the application management module; starting the application program, reading saved related information according to the scene identifier and restoring the application program by the application program itself.

The disclosure further provides a device for managing an application program, which includes:
an application program configured to save a current running state and restore the running state saved;
a scene program module located in a mobile terminal and configured to call a Save function with a return value of the application program to save a state of an application program and call a Startup function to restore the state of the application program; or
an application management module located in the mobile terminal and configured to call a Save function with a return value of the application program to save a state of an application program and call a Startup function to restore the state of the application program .

In the scheme above, the scene program module is specifically configured to send a Save parameter to the application program and associate a received scene identifier sent by the application program with the application program; to save all application programs in the current running application list and their scene identifiers as a scene file after calling Save functions of all current running application programs; the application program is specifically configured to receive a Save parameter sent by the scene program module, save current running related information, add a scene identifier, associate the scene identifier with the related information saved and send the scene identifier to the scene program module.

In the scheme above, the scene program module is specifically configured to read an application program list and the scene identifiers thereof in the scene file, send a Startup parameter including a scene identifier to the application program, receive information of restoration of the application program sent by the application program and continue to restore a next application program; the application program is specifically configured to send a Startup parameter including a scene identifier sent by the scene program module, start the application program, read the related information saved according to the scene identifier, restore the application program and send information of restoration of the application program to the scene program module.

In the scheme above, when the application management module calls a function, the device further includes: the scene program module configured to send information for saving a current program state to the application management module; correspondingly, the application management module configured to receive the information and call a Save function with a return value.

In the scheme above, the application management module is configured to call a Save function with a return value, receive a scene identifier sent by the application program, and send all current running application programs and their scene identifiers to the scene program module; correspondingly, the application program is configured to save current running related information, add a scene identifier, associate the scene identifier with the related information saved and send the scene identifier to the application management module; the scene program module is configured to receive the application programs and their scene identifiers sent by the application management module, and save the application programs and the scene identifiers as a scene file.

In the scheme above, the scene program module is configured to read an application program list and scene identifiers thereof in the scene file, send the application program list and the scene identifiers to the application management module and receive information of restoration of an application program sent by the application management module; the application management module is configured to receive the application program list and the scene identifiers thereof sent by the scene program, send a Startup parameter including a scene identifier to the application program, receive information indicative of restoration of the application program sent by the application program, continue to restore a next application program until all application programs are restored, and send information indicative of restoration of the application programs to the scene program module.

The method and device for managing the application program provided by the disclosure can save and restore a plurality of application programs in batches by calling the Save function and the Startup function corresponding to each application program in the application program list, and restore the application program to the state when it is saved. In this way, a plurality of application programs can be managed in batches, the process flow is simplified, the management efficiency is improved, the cost is reduced and the user experience is enhanced.

### BRIEF DESCRIPTION OF THE DRAWINGS

Fig. 1 shows a flowchart of a method for managing an application program according to the disclosure; and
Fig. 2 shows a structural diagram of a device for managing an application program according to the disclosure.

### DETAILED DESCRIPTION

The basic idea of the disclosure is that: a scene program module or an application management module saves a state of an application program by calling a Save function with a return value, and restores the state of the application program by calling a Startup function.

Here, the scene program module is located in a mobile terminal and is configured to save or restore an application program; the application management module is located in the mobile terminal and is configured to manage the application program and maintain the current running application program list, or save or restore the application program; the Save function with the return value, which is generated according to the requirement of the function framework in the mobile terminal platform and which is used for saving the state of the application program when receiving a Save parameter, is a function registered to the scene program module when installing the application program; when the application program is registered, the name and the Save parameter of the Save function with the return value, and the application program to which the Save function belongs are sent to the scene program module to be saved; the Startup function, which is generated according to the requirement of the function framework in the mobile terminal platform and which is used for restoring the state of the application program when receiving a Startup parameter, is a function registered to the scene program module when installing the application program; when the application program is registered, the name and the Startup parameter of the Startup function, and the application program to which the Save function belongs are sent to the scene program module to be saved.

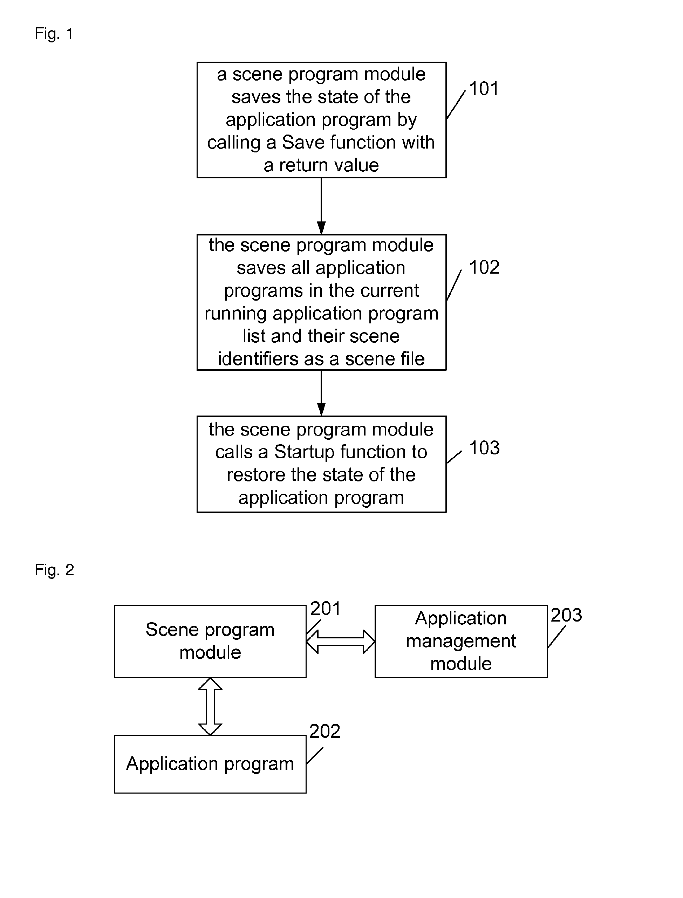

The disclosure is illustrated below in detail in conjunction with accompanying drawings and specific embodiments; as shown in Fig. 1, the method for managing the application program according to the disclosure includes the steps below.

Step 101: a scene program module saves the state of the application program by calling a Save function with a return value.

Here, the scene program module sends inquiry information to the application management module, wherein the inquiry information is used for inquiring the current running application program list; the current running application program list is updated in real time; once a new program is started, the current running application program list is updated; the current running application program list includes the information related to all current running application programs, for example, the name of the application program, the running state, and so on; the application management module receives the inquiry information and sends the current running application program list to the scene program module.

The process in which the scene program module saves the state of the application program by calling the Save function with the return value specifically includes: the scene program module calls the Save function with the return value corresponding to the application program in the current running application program list. Taking a first application program for example, the first application program saves the state of the current application program, that is, the current running related information, and returns a scene identifier to the scene program module; the scene program module associates the scene identifier with the first application program in the current running application program list.

Wherein the process of calling the Save function with the return value specifically includes: the scene program module needs to save the first application program, select the Save parameter in the Save function corresponding to the first application and send the Save parameter to the first application program, wherein the Save parameter can be any predetermined value, for example 0; when receiving the function name (0), the application program may save the application program; the first application program saves the current running related information to the data storage area, associates the saved related information with the first application program and at the same time adds a scene identifier to the saved related information.

Here, the related information includes all information of the first application program, for example, the running time, the running state, the running content, and so on; the data storage area can be individual data storage area in each application program, and can also be a data storage area shared by all application programs; the association with the first application program can be realized by adding the application program to which the related information belongs when saving the related information, and can also be other methods for defining the relationship between the related information and the application program.

The scene program module inquires the current running application program list, if all application programs are associated with the corresponding scene identifiers, then all application programs are saved, and a next step is executed; otherwise, the scene program module continues to save the state of a next application program; taking a second application program for example, the saving process is substantially similar to that of the first application program and the difference is that the state of the second application program is saved by calling a Save function with a return value of the second application program until the sate of all current running application programs is saved; a next step is executed.

Step 102: the scene program module saves all application programs in the current running application program list and their scene identifiers as a scene file.

Here, the scene file can be named by the user.

Step 103: the scene program module calls a Startup function to restore the state of the application program.

Here, the scene program module selects a scene file according to requirement, reads the application program and the scene identifier thereof in the scene file in turn.

Taking the first application program for example, the process that the scene program module calls a Startup function to restore the state of the application program specifically includes: the scene program module calls the Startup function of the first application program; the first application program is started and restored, information about the restoration is sent to the scene program module; the scene program module receives the information about the restoration sent by the first application program, continues to restore a next application program until all application programs in the scene file are restored to the state when they are saved.

The process of calling a Startup function includes: the scene program module fills the scene identifier into the Startup parameter, and sends the Startup parameter including the scene identifier to the first application program; the first application program receives the Startup parameter, starts the application program, and reads the related information saved in the data storage area according to the scene identifier; the state of the first application program is restored and information about the restoration of the application program is returned to the scene program module.

Besides, the disclosure can also be implemented by the following method, specifically: the scene program module sends information for saving the current running application program to the application management module, the application management module then calls a Save function with a return value corresponding to the application program according to the current running application program list; the application management module associates the scene identifier with the application program and sends them to the scene program module; the scene program module saves all current running application programs and their scene identifiers as a scene file; the scene program module selects the scene file, sends the application program list and the scene identifier thereof in the scene file to the application management module, and the application management module calls the Startup function; the application program is started and restored to the state previously saved and returns information about the restoration to the application management module.

The disclosure further provides a device for managing an application program, which includes: a scene program module 201 or an application management module 203, and more than one application program 202;
the application program 202 is configured to save the current running state and restore the saved running state;
the scene program module 201 is located in a mobile terminal and configured to save the state of the application program 202 by calling a Save function with a return value of the application program 202 and restore the application program 202 by calling a Startup function of the application program 202; or,
the application management module 203 is configured to save the state of the application program 202 by calling a Save function with a return value of the application program 202 and restore the application program 202 by calling a Startup function of the application program 202.

When the scene program module 201 calls the function, the device further includes:
an application management module 203 configured to receive the inquiry information sent by the scene program module 201 and send the current running application program list to the scene program module 201; wherein the inquiry information is used for inquiring the current running application programs; the current running application program list includes the related information of all current running application programs, for example, the name of the application program, the running state, and so on;
correspondingly, the scene program module 201 is configured to send inquiry information to the application management module and receive the application program list.

The scene program module 201 is specifically configured to send the Save parameter of the Save function with a return value of the application program 202 to the application program 202, receive the return value, i.e., the scene identifier, sent by the application program 202 and associate the scene identifier with the application program 202; when determining that there is an application program not saved, the scene program module 201 is configured to continue to save a next application program until all application programs in the application program list are saved, and save the application programs in the current running application program list and their scene identifiers as a scene file.

Here, the association of the scene identifier with the application program 202 can be realized by adding the application program to which the related information belongs when saving the related information, and can also be other methods for defining the relationship between the related information and the application program; the specific process of determining that there is an application program not saved includes: inquiring the current running application program list, if an application program is not associated with the scene identifier, then it is determined that the corresponding application program is not saved.

Correspondingly, the application program 202 is specifically configured to receive the Save parameter sent by the scene program module 201, save the related information of the current running state itself into the data storage area and associate the related information with itself, mark the saved related information as a scene identifier and return the scene identifier to the scene program module 201;
wherein, the related information includes all information of the application program, for example, the running time, the running state, the running content, and so on; the data storage area can be individual data storage area in each application program, and can also be a data storage area shared by all application programs.

The scene program module 201 is specifically configured to read the application program list and the scene identifier thereof in the scene file, fill the scene identifier into the Startup function corresponding to the application program, send the Startup parameter including the scene identifier to the application program 202, receive the information about restoration of the application program sent by the application program 202 and continue to restore a next application program.

The application program 202 is configured to receive the Startup parameter including the scene identifier, start the application program, read the related information saved in the data storage area according to the scene identifier, restore the running state of the application program and sending information about restoration of the application program to the scene program module.

When the application management module 203 calls the function,
the scene program module 201 is configured to send information for saving the state of the current program to the application management module 203;
the application management module 203 is configured to receive the information and call the Save function with the return value.

The application management module 203 is specifically configured to call the Save function with the return value, receive the scene identifier sent by the application program 202, and send all current running application programs and their scene identifiers to the scene program module 201;
correspondingly, the application program 202 is configured to save the current running related information, add a scene identifier, associate the scene identifier with the saved related information and send the scene identifier to the application management module 203;
the scene program module 201 is configured to receive the application programs and their scene identifiers sent by the application management module 203, and save the application programs and the scene identifiers as a scene file.

The scene program module 201 is specifically configured to read the application program list and the scene identifier thereof in the scene file, send the application program list and the scene identifier to the application management module 203 and receive the information about the restoration of the application program sent by the application management module 203;
correspondingly, the application management module 203 is configured to receive the application program list and the scene identifier thereof sent by the scene program module 201, send a Startup parameter including the scene identifier to the application program 202, receive the information about the restoration of the application program sent by the application program 202, continue to restore a next application program until all application programs are restored, and send the information about the restoration of the application program to the scene program module 201.

All those described above are only the preferred embodiments of the disclosure and not intended to limit the protection scope of the disclosure. Any modification, equivalent substitute and improvement within the spirit and principle of the disclosure will fall in the protection scope of the disclosure.

## Claims

1. A method for managing an application program, comprising:
saving, by a scene program module or an application management module of a mobile terminal, a state of an application program by calling a Save function with a return value, and restoring the state of the application program by calling a Startup function.

2. The method according to claim 1, further comprising:
before saving by the scene program module a state of an application program by calling a Save function with a return value, sending, by the scene program module, information for inquiring a current running application program to the application management module of the mobile terminal; after receiving the information by the application management module, sending by the application management module a current running application program list to the scene program module.

3. The method according to claim 1, further comprising:
before saving by the application management module a state of an application program by calling a Save function with a return value, sending, by the scene program module, information for saving a state of a current application program to the application management module.

4. The method according to claim 1, 2 or 3, wherein the saving a state of an application program by calling a Save function with a return value comprises:
calling a Save function with a return value of an application program in a current running application program list by the scene program module; saving current running related information and returning a scene identifier to the scene program module by the application program; then receiving the scene identifier returned by the application program and associating the scene identifier received with the application program by the scene program module;
after the scene program module calls Save functions of all current running application programs, saving all application programs and their scene identifiers as a scene file by the scene program module;
or, calling a Save function with a return value of an application program in a current running application program list by the application management module; saving current running related information and returning a scene identifier to the application management module by the application program; receiving the scene identifier returned by the application program and associating the scene identifier received with the application program by the application management module; sending all application programs and their scene identifiers to the scene program module by the application management module after the application management module calls Save functions of all current running application programs; saving the application programs and their scene identifiers as a scene file by the scene program module.

5. The method according to claim 4, wherein the calling a Save function with a return value of an application program in a current running application program list comprises:
sending a Save parameter to the application program by the scene program module or the application management module; then receiving the Save parameter, saving current running related information, associating the related information with the application program, adding a scene identifier to the related information saved and sending the scene identifier to the scene program module or sending the scene identifier to the application management module by the application program.

6. The method according to claim 5, wherein the restoring the state of the application program by calling a Startup function comprises:
selecting the scene file, reading an application program list and the scene identifier thereof in the scene file and calling a Startup function of an application program by the scene program module; and sending information indicative of restoration of the application program to the scene program module by the application program after the application program is started and restored; then continuing to restore a next application program by the scene program module until all application programs in the scene file are restored;
or, sending the application program list and the scene identifiers thereof in the scene file to the application management module by the scene program module; then calling a Startup function and restoring an application program in the scene file by the application management module.

7. The method according to claim 6, wherein the calling a Startup function comprises:
sending a Startup parameter including a scene identifier to the application program by the scene program module or the application management module; starting the application program, reading saved related information according to the scene identifier and restoring the application program by the application program itself.

8. A device for managing an application program, comprising:
an application program configured to save a current running state and restore the running state saved;
a scene program module located in a mobile terminal and configured to call a Save function with a return value of the application program to save a state of an application program and call a Startup function to restore the state of the application program; or
an application management module located in the mobile terminal and configured to call a Save function with a return value of the application program to save a state of an application program and call a Startup function to restore the state of the application program.

9. The device according to claim 8, wherein when the scene program module calls a function, the device further comprises:
the application management module configured to receive information sent by the scene program module and send a current running application program list to the scene program module;
correspondingly, the scene program module further configured to send information for inquiring a current running application program to the application management module and receive the current running application program list sent by the application management module.

10. The device according to claim 9, wherein
the scene program module is specifically configured to send a Save parameter to the application program and associate a received scene identifier sent by the application program with the application program; to save all application programs in the current running application list and their scene identifiers as a scene file after calling Save functions of all current running application programs;
the application program is specifically configured to receive a Save parameter sent by the scene program module, save current running related information, add a scene identifier, associate the scene identifier with the related information saved and send the scene identifier to the scene program module.

11. The device according to claim 10, wherein
the scene program module is specifically configured to read an application program list and the scene identifiers thereof in the scene file, send a Startup parameter including a scene identifier to the application program, receive information of restoration of the application program sent by the application program and continue to restore a next application program;
the application program is specifically configured to send a Startup parameter including a scene identifier sent by the scene program module, start the application program, read the related information saved according to the scene identifier, restore the application program and send information of restoration of the application program to the scene program module.

12. The device according to claim 8, wherein when the application management module calls a function, the device further comprises:
the scene program module configured to send information for saving a current program state to the application management module;
correspondingly, the application management module configured to receive the information and call a Save function with a return value.

13. The device according to claim 12, wherein
the application management module is configured to call a Save function with a return value, receive a scene identifier sent by the application program, and send all current running application programs and their scene identifiers to the scene program module;
correspondingly, the application program is configured to save current running related information, add a scene identifier, associate the scene identifier with the related information saved and send the scene identifier to the application management module;
the scene program module is configured to receive the application programs and their scene identifiers sent by the application management module, and save the application programs and the scene identifiers as a scene file.

14. The device according to claim 13, wherein
the scene program module is configured to read an application program list and scene identifiers thereof in the scene file, send the application program list and the scene identifiers to the application management module and receive information of restoration of an application program sent by the application management module;
the application management module is configured to receive the application program list and the scene identifiers thereof sent by the scene program, send a Startup parameter including a scene identifier to the application program, receive information indicative of restoration of the application program sent by the application program, continue to restore a next application program until all application programs are restored, and send information indicative of restoration of the application programs to the scene program module.
